# DEMANDE DE BREVET EUROPEEN

(11) **EP 0 598 632 A1**
(43) Date de publication de la demande: **25.05.1994**
(21) Numéro de dépôt: 93402248.4
(22) Date de dépôt: 15.09.1993
(51) Int. Cl.: G09B 19/24, B23B 3/02, B23B 7/02

(54) **Machine-outil de formation**

(30) Priorité: 18.09.1992 FR 9211170
(71) Demandeur: SOCIETE MEUSIENNE DE REALISATIONS MECANIQUES "REALMECA" Société anonyme, F-55120 Clermont en Argonne (FR)
(72) Inventeur: Friess, Jean, F-55120 Clermont en Argonne (FR)
(74) Mandataire: Keib, Gérard

(57) **Abrégé**

La machine-outil comprend un bâti (1) dans lequel est montée en rotation une broche (2) pour porter l'objet (3) à usiner, un chariot (4) mobile pour porter l'outil (6) destiné à usiner ledit objet (3), un directeur de commande numérique (7), pour commander le fonctionnement de la machine selon un programme prédéterminé. L'ensemble de la machine-outil présente l'apparence d'une machine réelle, l'objet (3) à usiner est en matière de faible résistance mécanique, de faible coût et recyclable, le mécanisme (8) sur lequel est montée en rotation la broche (2) porte-objet, ainsi que le mécanisme (5) sur lequel est monté en translation le chariot (4) porte-outil, sont de conception simplifiée, moins précise que dans une machine réelle, et le moteur (9) d'entraînement de la broche (2) et celui du chariot (4) sont moins puissants que dans une machine réelle.

Utilisation notamment pour la formation d'élèves débutant la commande numérique à tous niveaux.

## Description

La présente invention concerne une machine-outil, telle que tour ou fraiseuse, destinée à l'enseignement.

L'invention vise également un procédé pour former des élèves à l'utilisation d'une machine-outil à commande numérique.

Les machines-outils réelles du type tour comprennent un bâti dans lequel est montée en rotation une broche qui supporte l'objet à usiner. Elles comprennent d'autre part un chariot mobile pour porter l'outil de coupe destiné à usiner l'objet porté par la broche rotative. Par ailleurs, elles comportent un directeur de commande numérique pour commander le fonctionnement de la machine, c'est-à-dire le processus d'usinage selon un programme prédéterminé.

Ces machines sont capables de réaliser des usinages très précis, par exemple de l'ordre de 5 micromètres. Pour obtenir une telle précision, les mécanismes supportant en rotation la broche porte-objet et en translation le chariot porte-outil sont réalisés avec une très grande précision, à savoir de l'ordre de quelques micromètres. Ces mécanismes sont complexes, coûteux et relativement fragiles.

Par ailleurs, le moteur électrique d'entraînement de la broche porte-objet développe une puissance élevée (de l'ordre de plusieurs Kw) pour pouvoir vaincre les efforts engendrés par l'usinage de pièces en matériau à résistance mécanique élevée, tel que les aciers, les duralumins, etc. Ces moteurs sont également coûteux.

Ces machines-outils connues sont extrêmement coûteuses et de ce fait peu adaptées à l'enseignement ou à la formation des élèves débutants ou ayant un nombre d'heures de pratique insuffisant.

De plus, ces machines-outils sont en raison de la très grande précision de leurs mécanismes, très sensibles à l'égard des contraintes mécaniques qu'elles peuvent subir en cas de fausses manoeuvres commandées par l'élève via le directeur de commande numérique.

De telles fausses manoeuvres sont naturellement fréquentes chez des élèves qui n'ont pas encore parfaitement assimilé le maniement du directeur de commande.

Ces fausses manoeuvres peuvent entraîner une détérioration de l'outil d'usinage, du mécanisme d'entraînement du chariot porte-outil, du mécanisme supportant en rotation la broche porte-objet, ainsi que du moteur d'entraînement de celle-ci.

De telles détériorations entraînent des coûts de réparation extrêmement élevés.

De plus, l'usinage de pièces en acier ou autre matériau à résistance mécanique élevée par les élèves avec de telles machines entraîne une consommation excessive de matière non récupérable, ce qui grève encore davantage le coût de la formation des élèves.

On connaît par ailleurs des simulateurs qui permettent aux élèves d'apprendre le fonctionnement d'une machine-outil. Cependant, ces simulateurs ne mettent pas les élèves dans les conditions réelles d'utilisation des machines-outils. En particulier, ces simulateurs ne permettent pas aux élèves l'acquisition des réflexes nécessaires pour éviter les accidents et fausses manoeuvres susceptibles d'entraîner des coûts de réparation élevés.

Le but de la présente invention est de remédier aux inconvénients précités en proposant une machine-outil et un procédé de formation permettant d'assurer une formation optimale des élèves, cette machine étant d'un coût nettement réduit par rapport à celui des machines existantes, ne subissant aucun dommage en cas de fausse manipulation, tout en mettant les élèves dans les conditions réelles d'utilisation d'une machine-outil du type industriel.

L'invention vise ainsi une machine-outil, telle que tour, destinée à l'enseignement comprenant un bâti dans lequel est montée en rotation une broche pour porter l'objet à usiner, un chariot mobile pour porter l'outil destiné à usiner ledit objet, un directeur de commande numérique pour commander le fonctionnement de la machine selon un programme prédéterminé. Ce directeur à commande numérique peut être identique à celui d'une machine-outil réelle.

Suivant l'invention, cette machine-outil est caractérisée en ce que l'ensemble de la machine-outil présente sensiblement l'apparence d'une machine réelle, en ce que l'objet à usiner est en matière de faible résistance mécanique, de faible coût et/ou recyclable, en ce que le mécanisme sur lequel est montée en rotation la broche porte-objet, ainsi que le mécanisme sur lequel est monté en translation le chariot porte-outil, sont de conception simplifiée, moins précise que dans une machine réelle, et en ce que le moteur d'entraînement de la broche et celui du chariot sont moins puissants que dans une machine réelle.

Le fait que la machine-outil présente sensiblement l'apparence d'une machine réelle, met les élèves dans les conditions psychologiques de l'utilisation d'une machine réelle, ce qui les aide à acquérir les réflexes nécessaires pour utiliser correctement une machine réelle.

Le fait que l'objet à usiner soit en matière de faible résistance mécanique, de faible coût et/ou recyclable apporte deux avantages :
- tout d'abord, en cas de mauvaise manipulation, telle que l'introduction d'une mauvaise donnée dans le directeur de commande numérique, aucune contrainte anormale ne risque d'être engendrée au niveau de l'outil, des mécanismes et des moteurs de la machine, du fait que l'objet à usiner est en matière de faible résistance mécanique ;
- ensuite, on diminue considérablement le coût d'utilisation de la machine, en évitant le gaspillage engendré par l'emploi de matériaux nobles, coûteux et non recyclables.

Le fait que la précision des mécanismes est nettement moindre que celle des mécanismes des machines réelles, permet de réduire considérablement le coût de fabrication et de maintenance des machines d'enseignement.

L'invention apporte ainsi une solution au problème de la formation des élèves destinés à utiliser des machines-outils.

L'invention vise également un procédé pour former des élèves à l'utilisation d'une machine-outil à commande numérique.

Suivant l'invention, ce procédé est caractérisé en ce qu'on met en présence de l'élève une machine-outil présentant sensiblement l'apparence d'une machine réelle, mais dont le mécanisme sur lequel est montée en rotation la broche porte-objet, ainsi que le mécanisme sur lequel est monté en translation le chariot porte-outil, sont de conception simplifiée, moins précise que dans une machine réelle, et dont les moteurs d'entraînement de la broche et du chariot sont moins puissants que dans une machine réelle, et en ce qu'on demande à l'élève d'usiner un objet en matière de faible résistance mécanique, de faible coût et/ou recyclable.

D'autres particularités et avantages de l'invention apparaîtront encore dans la description ci-après.

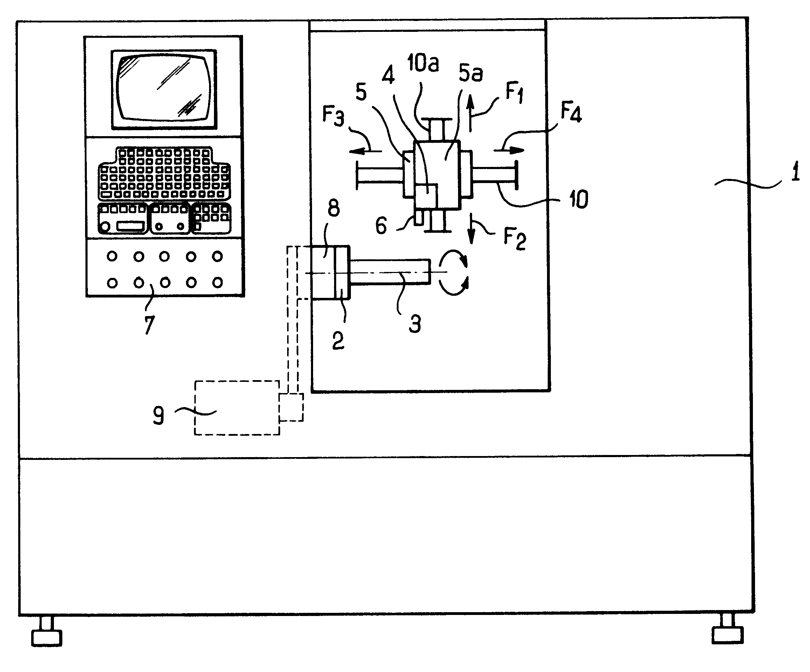

La figure unique annexée, représente à titre d'exemple non limitatif une machine-outil destinée à l'enseignement, conforme à l'invention.

La machine-outil représentée sur la figure est un tour à commande numérique.

Le tour à commande numérique représenté sur la figure est destiné à l'enseignement. Il comprend un bâti 1 dans lequel est montée en rotation une broche 2 pour porter l'objet 3 à usiner, un chariot 4 mobile sur des glissières 5 et 5a pour porter l'outil 6 destiné à usiner l'objet 3. Dans l'exemple représenté, et de manière classique, le chariot porte-outil 4 est fixé sur la glissière 5a qui se déplace le long du rail 10a dans les deux sens (flèches F1, F2). Le rail 10a est porté par la glissière 5 qui se déplace dans les deux sens (flèches F3, F4) le long du rail 10 fixé au bâti 1.

Le bâti 1 comporte sur sa face avant un directeur de commande numérique 7, pour commander le fonctionnement du tour selon un programme prédéterminé.

Conformément à l'invention, l'ensemble du tour y compris son bâti 1 a sensiblement l'apparence d'un tour réel.

L'objet 3 à usiner est en matière de faible résistance mécanique, de faible coût et/ou recyclable, telle qu'une matière plastique thermofusible.

Le mécanisme 8 sur lequel est montée en rotation la broche 2 porte-objet, ainsi que le mécanisme 5, 5a sur lequel est monté en translation suivant deux axes perpendiculaires le chariot 4 porte-outil, sont de conception simplifiée, moins précise que dans une machine réelle.

Par ailleurs, le moteur d'entraînement 9 de la broche 2 ainsi que celui ou ceux d'entraînement du chariot 4 sont moins puissants que dans une machine-outil réelle.

Cependant, le directeur de commande 7 est en tous points identique à celui d'une machine-outil réelle.

La précision des mécanismes 8, 5, 5a supportant en rotation la broche 2 porte-objet et en translation le chariot porte-outil est de l'ordre du dixième de mm au lieu de quelques micromètres dans le cas d'une machine réelle. Ces mécanismes 8, 5, 5a réalisés selon une technique tout à fait ordinaire sont par conséquent beaucoup moins coûteux que dans les tours réels usinant avec une grande précision.

Le moteur 9 d'entraînement de la broche 2 a une puissance de quelques centaines de W au lieu de plusieurs KW dans le cas d'une machine réelle. Il s'agit donc d'un moteur électrique ordinaire peu coûteux.

On va maintenant décrire le procédé pour enseigner à des élèves l'utilisation d'une machine-outil telle que le tour à commande numérique représenté sur la figure annexée.

Selon ce procédé, on met en présence de l'élève un tour présentant sensiblement l'apparence d'une machine réelle, mais dont le mécanisme 8 sur lequel est montée en rotation la broche 2 porte-objet, ainsi que le mécanisme 5, 5a sur lequel est monté en translation le chariot 4 porte-outil sont de conception simplifiée, moins précise que dans une machine réelle, et dont les moteurs d'entraînement de la broche 2 et du chariot 4 sont moins puissants que dans le cas d'une machine réelle.

Selon ce procédé, on demande à l'élève d'usiner un objet 3 en matière de faible résistance, de faible coût et/ou recyclable telle qu'une matière plastique thermofusible.

En fin d'usinage, on récupère les copeaux d'usinage de l'objet 3 en matière thermofusible, on fond ces derniers et on moule la matière fondue sous la forme de l'objet brut initial pour pouvoir la réutiliser.

Les principaux avantages de la machine et du procédé que l'on vient de décrire sont les suivants.

La machine-outil conforme à l'invention est beaucoup moins coûteuse que les machines réelles, étant donné que les mécanismes sont simplifiés et moins précis. D'ailleurs, pour former des élèves, la précision de l'usinage n'est pas nécessaire, l'essentiel étant que ceux-ci apprennent à se servir correctement du directeur de commande, et évitent ainsi d'introduire dans celui-ci des données mauvaises. On peut ainsi concevoir pour la machine un bâti simplifié, réalisé par exemple en béton.

En cas d'introduction de mauvaises données dans le directeur de commande, ce qui est inévitable dans le cas d'un personnel dont la formation est inachevée, les conséquences ne sont pas catastrophiques car aucune contrainte mécanique néfaste ne risque d'être engendrée au niveau de l'outil 6, du chariot 4, de la broche 2 et des mécanismes 5, 5a, 8 puisque l'usinage est effectué sur un objet en matière de faible ou très faible résistance mécanique.

Avec une telle matière, on supprime pratiquement toute usure de l'outil et tout risque de casse de celui-ci.

Ainsi les réparations coûteuses sont évitées et le coût d'entretien de la machine-outil de formation est pratiquement nul.

De plus, le coût d'utilisation de la machine est encore réduit du fait que les objets usinés sont en une matière recyclable. On évite ainsi tout gaspillage.

Enfin et surtout, l'invention permet de mettre en présence des élèves non pas un simulateur, mais une machine ayant l'aspect et tous les organes de commande et de fonctionnement d'une machine réelle.

L'élève est ainsi mis exactement dans les conditions d'une machine réelle, ce qui l'amène à acquérir rapidement les réflexes nécessaires qui au demeurant sont sans conséquence vis-à-vis de la machine.

Bien entendu, le principe qui est à la base de la présente invention peut être appliqué à tous les types de machines-outils : fraiseuses, centres d'usinage, cellules flexibles à N machines-outils.

Bien entendu, avec une légère augmentation de la puissance des moteurs, on peut réaliser l'usinage d'objets dans des matières mécaniquement plus résistantes, plus coûteuses qu'une matière plastique thermofusible, mais facilement recyclable.

## Revendications

1. Machine-outil, telle que tour, destinée à l'enseignement, comprenant un bâti (1) dans lequel est montée en rotation une broche (2) pour porter l'objet (3) à usiner, un chariot (4) mobile pour porter l'outil (6) destiné à usiner ledit objet (3), un directeur de commande numérique (7), pour commander le fonctionnement de la machine selon un programme prédéterminé, caractérisée en ce que l'ensemble de la machine-outil présente sensiblement l'apparence d'une machine réelle, en ce que l'objet (3) à usiner est en matière de faible résistance mécanique, de faible coût et/ou recyclable, en ce que le mécanisme (8) sur lequel est montée en rotation la broche (2) porte-objet, ainsi que le mécanisme (5, 5a) sur lequel est monté en translation le chariot (4) porte-outil, sont de conception simplifiée, moins précise que dans une machine réelle, et en ce que le moteur (9) d'entraînement de la broche (2) et celui du chariot (4) sont moins puissants que dans une machine réelle.

2. Machine-outil conforme à la revendication 1, caractérisée en ce que l'objet (3) à usiner est en matière plastique thermofusible.

3. Machine-outil conforme à la revendication 1, caractérisée en ce que la précision des mécanismes (8, 5, 5a) supportant en rotation la broche (2) porte-objet et en translation le chariot (4) porte-outil est de l'ordre du dixième de mm au lieu de quelques micromètres dans le cas d'une machine réelle.

4. Machine-outil conforme à l'une des revendications 1 à 3, caractérisée en ce que le moteur (9) d'entraînement de la broche (2) a une puissance de quelques centaines de W au lieu de plusieurs KW dans le cas d'une machine réelle.

5. Procédé pour enseigner à des élèves l'utilisation d'une machine-outil à commande numérique, caractérisé en ce qu'on met en présence de l'élève une machine-outil présentant sensiblement l'apparence d'une machine réelle, mais dont le mécanisme (8) sur lequel est montée en rotation la broche (2) porte-objet, ainsi que le mécanisme (5, 5a) sur lequel est monté en translation le chariot (4) porte-outil, sont de conception simplifiée, moins précises que dans une machine réelle, et dont les moteurs d'entraînement de la broche (2) et du chariot (4) assurant les déplacements longitudinaux et transversaux sont moins puissants que dans une machine réelle, et en ce qu'on demande à l'élève d'usiner un objet (3) en matière de faible résistance mécanique, de faible coût et recyclable.

6. Procédé conforme à la revendication 5, l'objet (3) à usiner étant en matière plastique thermofusible, caractérisé en ce qu'on récupère les copeaux d'usinage de l'objet, on fond ces derniers et on moule la matière fondue sous la forme de l'objet brut initial pour pouvoir la réutiliser.
